(19) **Europäisches Patentamt**
**European Patent Office**
**Office européen des brevets**

(11) **EP 4 478 142 A1**

(12) **EUROPÄISCHE PATENTANMELDUNG**

(43) Veröffentlichungstag:
**18.12.2024 Patentblatt 2024/51**

(21) Anmeldenummer: **23179685.5**

(22) Anmeldetag: **16.06.2023**

(51) Internationale Patentklassifikation (IPC):
**G05B 23/02** *(2006.01)* **G06N 3/045** *(2023.01)*
**G05B 13/02** *(2006.01)*

(52) Gemeinsame Patentklassifikation (CPC):
**G05B 23/024; G05B 23/0283; G06N 3/0455**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens AG Österreich**
**1210 Wien (AT)**

(72) Erfinder: **Schall, Daniel**
**2020 Hollabrunn (AT)**

(74) Vertreter: **Siemens Patent Attorneys**
**Postfach 22 16 34**
**80506 München (DE)**

(54) **PRÄDIKTION VON WARNEREIGNISSEN**

(57) Die Erfindung bezieht sich auf die Prädiktion von Warnereignissen, wobei mittels eines künstlichen neuronalen Netzes (8) zumindest eine erste Abweichung eines technischen ersten Ist-Zustands von einem technischen ersten Soll-Zustand auf Basis einer Mehrzahl von Kennwerten detektiert wird.

Es wird vorgeschlagen, dass zumindest ein Dominanzkennwert ermittelt wird, welcher die erste Abweichung dominierend charakterisiert und welchem zumindest eine Warnereigniskategorie umfassend zumindest einen Warnereignisschwellwert zugeordnet wird, dass zumindest ein zumindest eine Bedingung für ein Warnereignis erfüllender Aufmerksamkeitskennwert gebildet und in das neuronale Netz (8) eingesetzt wird, und dass mittels des neuronalen Netzes (8) mit dem zumindest einen Aufmerksamkeitskennwert zweite Abweichungen technischer zweiter Ist-Zustände von einem technischen zweiten Soll-Zustand in einem zeitlichen Verlauf (13) detektiert werden, wobei prognostiziert wird, nach welcher Zeitdauer ($\Delta t$) der zumindest eine Warnereignisschwellwert durch die zweiten Abweichungen in ihrem zeitlichen Verlauf (13) erreicht wird.

Dadurch wird eine rechtzeitige Reaktion auf kritische technische Zustände ermöglicht.

FIG 1

EP 4 478 142 A1

**Beschreibung**

Die Erfindung betrifft ein computerimplementiertes Verfahren, eine Vorrichtung, ein Computerprogrammprodukt und ein System zur Prädiktion von Warnereignissen insbesondere für Maschinen, wobei in einem ersten Verfahrensschritt mittels eines künstlichen neuronalen Netzes zum Lernen von Codierungen zumindest eine erste Abweichung eines technischen ersten Ist-Zustands von einem technischen ersten Soll-Zustand auf Basis einer Mehrzahl von Kennwerten detektiert wird.

Bei Maschinen, industriellen Anlagen, Fahrzeugen, Flugzeugen etc. werden häufig Diagnose- und/oder Überwachungsverfahren eingesetzt, um z.B. Schäden, Fehler und/oder Störungen rechtzeitig erkennen und beheben zu können und um beispielsweise eine zustandsbasierte, prädiktive Wartung und/oder Instandhaltung umsetzen zu können.

Eine Detektion technischer Anomalien erfolgt häufig mittels künstlicher Intelligenz, wobei häufig künstliche neuronale Netze, die beispielsweise als sogenannte Autoencoder umgesetzt sein können, eingesetzt werden.

Als Indikatoren für Abweichungen technischer Ist-Zustände von technischen Soll-Zuständen werden dabei oft sogenannte Rekonstruktionsfehler ermittelt, die beispielsweise als mittlere quadratische Fehler bestimmt werden können. Mit derartigen Indikatoren allein sind jedoch keine genauen Rückschlüsse auf ein Verschleißverhalten oder eine Verschlechterung eines physikalischen Zustands möglich. Weiterhin ist mittels Autoencodern allein eine Prognosebildung über Zeitdauern bis zum Eintreten eines Schadens, eines Fehlers oder einer Störung nicht realisierbar.

Aus dem Stand der Technik ist beispielsweise die DE 10 2016 013 985 A1 bekannt, in der eine Vorrichtung für maschinelles Lernen bei einer Maschine offenbart ist. Die Vorrichtung weist eine Funktionsaktualisierungseinheit auf, mittels welcher eine Funktion zur Ermittlung einer Anzahl von Positionsfehlern einer Maschine auf Grundlage einer Zustandsvariablen gemäß einem neuronalen Netzwerkmodell aktualisiert wird.

Ferner zeigt die WO 2022/225506 A1 ein Verfahren zur Detektion von Fehlern von Fahrwerken, wobei ein Autoencoder mit ersten Beschleunigungsdaten eines ersten Fahrwerks eines ersten Schienenfahrzeugs trainiert wird. Zweite Beschleunigungsdaten werden während eines Betriebs eines zweiten Fahrwerks eines zweiten Schienenfahrzeugs erfasst und von dem Autoencoder empfangen. Mittels des auf Basis der ersten Beschleunigungsdaten trainierten Autoencoder und der von dem Autoencoder empfangenen zweiten Beschleunigungsdaten können Anomalien des zweiten Fahrwerks detektiert werden.

Die WO 2019/219756 A1 beschreibt weiterhin ein Verfahren und eine Vorrichtung zur Diagnose und Überwachung von Fahrzeugen, Fahrzeugkomponenten, Fahrwegen und Fahrwegkomponenten. Signale aus Sensormessungen werden an eine Recheneinheit übertragen. Aus einer statistischen Klassifikation oder einer Prädiktion auf Basis der verarbeiteten Signale wird ein technischer Zustandsindikator gebildet, wozu beispielsweise eine Methode maschinellen Lernens eingesetzt sein kann.

Der Erfindung liegt die Aufgabe zugrunde, ein gegenüber dem Stand der Technik weiterentwickeltes Verfahren anzugeben, mit dem kritische technische Zustände antizipiert werden können.

Erfindungsgemäß wird diese Aufgabe gelöst mit einem Verfahren nach Anspruch 1, bei dem auf Grundlage des ersten Verfahrensschritts in einem zweiten Verfahrensschritt zumindest ein Dominanzkennwert ermittelt wird, welcher die erste Abweichung dominierend charakterisiert, bei dem in einem dritten Verfahrensschritt dem zumindest einen Dominanzkennwert zumindest eine Warnereigniskategorie umfassend zumindest einen Warnereignisschwellwert zugeordnet wird, bei dem in einem vierten Verfahrensschritt zumindest ein zumindest eine Bedingung für ein Warnereignis der Warnereigniskategorie erfüllender Aufmerksamkeitskennwert gebildet und in das künstliche neuronale Netz eingesetzt wird, und bei dem in einem fünften Verfahrensschritt mittels des künstlichen neuronalen Netzes mit dem zumindest einen, eingesetzten Aufmerksamkeitskennwert zweite Abweichungen technischer zweiter Ist-Zustände von einem technischen zweiten Soll-Zustand in einem zeitlichen Verlauf detektiert werden, wobei prognostiziert wird, nach welcher Zeitdauer der zumindest eine Warnereignisschwellwert durch die zweiten Abweichungen in ihrem zeitlichen Verlauf erreicht wird, um einen kritischen technischen Zustand vor dessen Eintreten erkennen und behandeln zu können.

Durch diese Maßnahme kann beispielweise eine Maschine rechtzeitig vor einem Eintritt eines kritischen Zustands ausgeschaltet werden oder es können zur Abwendung von Risiken (z.B. im Hinblick auf einen Schaden der Maschine) Maschinenparameter nachjustiert werden etc. Darüber hinaus kann durch das erfindungsgemäße Verfahren eine zustandsbezogene oder prädiktive Wartung und/oder Instandhaltung realisiert werden. Durch Kenntnis der Zeitdauer, nach welcher der Warnereignisschwellwert durch die zweiten Abweichungen in ihrem zeitlichen Verlauf erreicht wird, wird ein Zeitvorteil erreicht, welcher für eine Vorbereitung einer Reaktion auf einen kritischen Zustand (z.B. für eine schrittweise Drehzahlreduktion an einer Maschine etc.) oder für eine Ersatzteilbeschaffung etc. genutzt werden kann.

Weiterhin wird durch das erfindungsgemäße Verfahren auch ein effizienter Einsatz von Prozessorressourcen ermöglicht, da in dem Verfahren ein Fokus auf eine dominierende Charakteristik kritischer Zustände gerichtet wird.

Die Warnereigniskategorie, gemäß welcher die zweiten Abweichungen detektiert werden, kann beispielsweise einen Warnereignistyp betreffen, bei welchem ein Wert oder Werte ein kritisches Verhalten oder eine kritische Entwicklung eines Zustands (z.B. einer Maschine) indizieren, vor welchem oder vor welcher gewarnt wird.

Beispielsweise können die zweiten Abweichungen Temperaturabweichungen zwischen einem Ist-Zustand und einem Soll-Zustand sein und kann der Warnereignisschwellwert ein Temperaturschwellwert sein etc.

Das künstliche neuronale Netz kann beispielsweise als Autoencoder ausgeführt sein etc.

Die erste Abweichung und die zweiten Abweichungen können beispielsweise über Ermittlung von Rekonstruktionsfehlern ermittelt werden etc.

Der Warnereignisschwellwert kann beispielsweise in einer Datenbank gespeichert werden etc.

Weitere vorteilhafte Ausgestaltungen des erfindungsgemäßen Verfahrens ergeben sich aus den Unteransprüchen.

Ist z.B. eine Temperaturinformation ein wichtiger Aspekt zur Prädiktion eines Warnereignisses, so kann es hilfreich sein, wenn der zumindest eine Warnereignisschwellwert und die zweiten Abweichungen temperaturbasiert sind.

In Fällen, in welchen z.B. Druckverhältnisse (beispielsweise ein Druck eines Hydraulikfluids in einem Zylinder) eine bedeutsame Information zur Vorhersage kritischer Zustände darstellen, kann es günstig sein, wenn der zumindest eine Warnereignisschwellwert und die zweiten Abweichungen druckbasiert sind.

Soll eine Prädiktion von Warnereignissen z.B. unter Berücksichtigung eines Schwingverhaltens eines Bauteils oder einer Baugruppe vorgenommen werden, so kann es vorteilhaft sein, wenn der zumindest eine Warnereignisschwellwert und die zweiten Abweichungen schwinggeschwindigkeitsbasiert sind.

Es ist beispielsweise auch möglich, dass der Warnereignisschwellwert und die zweiten Abweichungen aus Temperaturinformationen und Druckinformationen, aus Temperaturinformationen und Schwinggeschwindigkeitsinformationen, aus Druckinformationen und Schwinggeschwindigkeitsinformationen oder aus Temperaturinformationen, Druckinformationen und Schwinggeschwindigkeitsinformationen etc. zusammengesetzt sind, d.h. temperatur- und druckbasiert, temperatur- und schwinggeschwindigkeitsbasiert, druck- und schwinggeschwindigkeitsbasiert oder temperatur-, druck- und schwinggeschwindigkeitsbasiert sind.

Eine Bildung des Dominanzkennwerts auf Grundlage einer Häufigkeitsverteilung von Kennwertausprägungen wird ermöglicht, wenn der zumindest eine Dominanzkennwert aus einem Histogramm, umfassend die Mehrzahl an Kennwerten, ermittelt wird.

Eine statistische Auswertung von Beziehungen zwischen den zweiten Abweichungen und Vorhersagewerten der zweiten Abweichungen kann modelliert werden, wenn in dem fünften Verfahrensschritt mittels einer Regressionsanalyse prognostiziert wird, nach welcher Zeitdauer der zumindest eine Warnereignisschwellwert durch die zweiten Abweichungen in ihrem zeitlichen Verlauf erreicht wird.

Beispielsweise kann dabei geprüft werden, bei welchem Koordinatenwert einer Zeitachse der prognostizierte zeitliche Verlauf eine konstante Funktion, welche den Warnereignisschwellwert repräsentiert, schneidet etc.

Eine Vorzugslösung erhält man, wenn in dem Verfahren Daten aus einem Steuergerät verarbeitet werden.

Durch diese Maßnahme können Zustandswerte, welche von dem Steuergerät beispielsweise für Steuerungs- oder Regelungsvorgänge verarbeitet werden, auch für das erfindungsgemäßen Verfahren genutzt werden.

Eine rechtzeitige Reaktion auf einen prognostizierten kritischen Maschinenzustand wird ermöglicht, wenn dann, wenn die mittels des fünften Verfahrensschritts ermittelte Zeitdauer gleich einem definierten Zeitgrenzwert oder kleiner als der Zeitgrenzwert ist, zumindest ein Maschinenparameter einer Maschine beeinflusst wird.

Hierbei kann beispielsweise mittels des fünften Verfahrensschritts ein Befehl zur Veränderung des zumindest einen Maschinenparameters der Maschine gebildet werden etc.

Günstig ist es, wenn der zumindest eine Maschinenparameter eine Maschinendrehzahl ist.

Durch diese Maßnahme kann bei einem prognostizierten kritischen Maschinenzustand beispielsweise die Maschinendrehzahl kontinuierlich reduziert oder ein Notstopp der Maschine veranlasst werden etc.

Beispielsweise bei Werkzeugmaschinen kann es im Hinblick auf eine Abwendung eines kritischen Maschinenzustands hilfreich sein, wenn der zumindest eine Maschinenparameter ein Vorschub ist.

Im Hinblick auf eine Ankündigung eines prädizierten kritischen Zustands (beispielsweise an eine Maschinenbedienerin oder einen Maschinenbediener etc.) ist es empfehlenswert, wenn dann, wenn die mittels des fünften Verfahrensschritts ermittelte Zeitdauer gleich einem definierten Zeitgrenzwert oder kleiner als der Zeitgrenzwert ist, eine visuelle oder/und akustische Warnung ausgegeben wird.

Eine vorteilhafte Lösung wird erreicht, wenn in dem Verfahren der zumindest eine Warnereignisschwellwert aus einer industriellen Einrichtung zur Überwachung, Steuerung und/oder Datenerfassung verarbeitet wird.

Die industrielle Einrichtung zur Überwachung, Steuerung und/oder Datenerfassung kann beispielsweise eine Supervisory Control and Data Acquisition (SCADA) - Einrichtung sein. Da mittels einer derartigen industriellen Einrichtung üblicherweise eine Betriebsdatenerfassung oder eine Maschinendatenerfassung und, zur Detektion von Fehlern, Störungen und/oder Schäden, Schwellwertvergleiche vorgenommen werden können, kann das erfindungsgemäße Verfahren durch diese Maßnahme auf eine umfangreiche Datenbasis (beispielsweise im Hinblick auf eine genaue Einschätzung kritischer Maschinenzustände etc.) zugreifen.

Das erfindungsgemäße Verfahren kann, z.B. im Hinblick auf erfolgversprechende steuerungs- oder regelungstechnische Anwendungen, beispielsweise in eine Vorrichtung zur Datenverarbeitung, umfassend Mittel zur Ausführung des erfindungsgemäßen Verfahrens, implementiert sein.

Im Zusammenhang mit steuerungs- oder regelungstechnischen Anwendungen ist es günstig, wenn die Vorrichtung ein Steuergerät umfasst.

Ein erfolgversprechendes Anwendungsgebiet für das erfindungsgemäße Verfahren wird mit einem Computerprogrammprodukt, umfassend Befehle, die bewirken, dass die erfindungsgemäße Vorrichtung das erfindungsgemäße Verfahren ausführt, erschlossen.

Für eine Prädiktion von Warnereignissen in einer industriellen Umgebung kann ein System, umfassend zumindest eine erfindungsgemäße Vorrichtung, in welcher ein erfindungsgemäßes Computerprogrammprodukt implementiert ist, ferner umfassend zumindest eine Maschine, zumindest eine Ausgabeeinheit zur Ausgabe von visuellen oder/und akustischen Warnungen sowie zumindest eine industrielle Einrichtung zur Überwachung, Steuerung und/oder Datenerfassung, empfehlenswert sein, bei dem die zumindest eine Vorrichtung mit der zumindest einen Maschine, mit der zumindest einen Ausgabeeinheit sowie mit der zumindest einen industriellen Einrichtung zur Überwachung, Steuerung und/oder Datenerfassung signalübertragend verbunden ist.

Durch diese Maßnahme wird eine effektive Vernetzung von Komponenten des Systems erreicht, welche Funktionen im Zusammenhang mit der Prädiktion von Warnereignissen ausführen.

Nachfolgend wird die Erfindung anhand von Ausführungsbeispielen näher erläutert.

Es zeigen beispielhaft:

Fig. 1: Ein Flussdiagramm einer beispielhaften Ausführungsvariante eines erfindungsgemäßen Verfahrens zur Prädiktion von Warnereignissen, in welchem Daten aus einem Steuergerät verarbeitet werden,

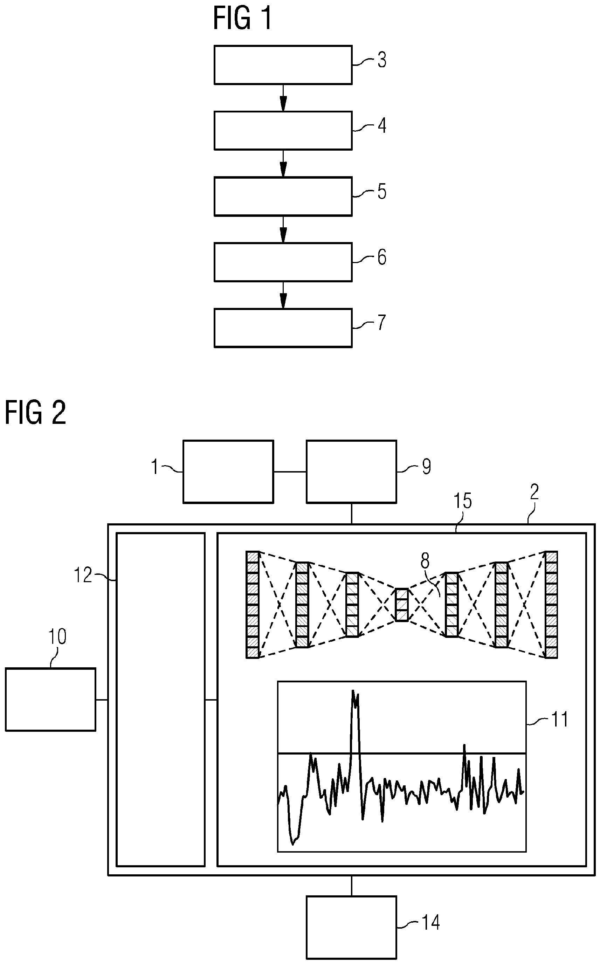

Fig. 2: Eine schematische Darstellung einer beispielhaften Ausführungsvariante eines erfindungsgemäßen Systems zur Prädiktion von Warnereignissen, umfassend eine beispielhafte Ausführungsvariante einer erfindungsgemäßen, ein Steuergerät umfassenden Vorrichtung, in welcher eine beispielhafte Ausführungsvariante eines erfindungsgemäßen Computerprogrammprodukts implementiert ist, ferner umfassend zumindest eine Maschine, zumindest eine Ausgabeeinheit zur Ausgabe von visuellen und akustischen Warnungen sowie zumindest eine industrielle Einrichtung zur Überwachung, Steuerung und Datenerfassung, und

Fig. 3: Ein Ergebnisdiagramm einer im Zusammenhang mit der beispielhaften Ausführungsvariante eines erfindungsgemäßen Verfahrens gemäß Fig. 1 durchgeführten Regressionsanalyse, mit einer ermittelten Zeitdauer zwischen einem Ist-Zustand und einem prognostizierten Eintritt eines Warnereignisses.

Fig. 1 zeigt eine beispielhafte Ausführungsvariante eines erfindungsgemäßen, computerimplementierten Verfahrens zur Prädiktion von Warnereignissen für eine Maschine 1, wie sie beispielhaft in Fig. 2 dargestellt ist.

Das erfindungsgemäße Verfahren ist in dieser beispielhaften Ausführungsvariante in einer Recheneinrichtung 2, wie sie beispielhaft in Fig. 2 offenbart ist, implementiert.

In einem ersten Verfahrensschritt 3 des Verfahrens wird mittels eines künstlichen neuronalen Netzes 8 zum Lernen von Codierungen, wie es beispielhaft in Fig. 2 gezeigt ist, eine erste Abweichung eines messtechnisch an der Maschine 1 erfassten, technischen ersten Ist-Zustands der Maschine 1 (in dem Verfahren gemäß Fig. 1 handelt es sich dabei um einen Ist-Verschleißzustand eines Lagers der Maschine 1) von einem technischen ersten Soll-Zustand der Maschine 1 (in dem Verfahren gemäß Fig. 1 handelt es sich dabei um einen Soll-Verschleißzustand des Lagers) auf Basis einer Mehrzahl von Kennwerten, welche technische Zustände der Maschine 1 beschreiben und erkennbar machen, detektiert.

Mit dem ersten Ist-Zustand korrelierende Ist-Werte $I_i$ werden von einem speicherprogrammierbaren Steuergerät 9, wie es beispielhaft in Fig. 2 gezeigt ist, in die Recheneinrichtung 2 übertragen und in dem erfindungsgemäßen Verfahren verarbeitet.

Mit dem ersten Soll-Zustand korrelierende Soll-Werte $S_i$ werden von einer industriellen Einrichtung 10 zur Überwachung, Steuerung und Datenerfassung, wie sie beispielhaft in Fig. 2 gezeigt ist und welche als Supervisory Control and Data Acquisition (SCADA) - Einrichtung ausgeführt ist, in die Recheneinrichtung 2 übertragen.

Differenzen aus den Soll-Werten $S_i$ und den Ist-Werten $I_i$ bilden die Kennwerte, welche technische Zustände der Maschine 1 beschreiben und erkennbar machen.

Das neuronale Netz 8 ist als Autoencoder ausgebildet, mit welchem eine komprimierte Repräsentation für einen Datensatz mit den Kennwerten gelernt wird (Encoding) und mit welchem Parameter, welche einen kritischen technischen Zustand der Maschine 1 (in dem Verfahren gemäß Fig. 1 handelt es sich dabei um einen übermäßigen Verschleiß des Lagers) charakterisieren, extrahiert werden können. Der Autoencoder umfasst drei Schichten, nämlich eine Eingabeschicht, eine Encoding-Schicht und eine Ausgabeschicht.

Die Eingabeschicht umfasst erste Neuronen, welche die Kennwerte der Maschine 1 beschreiben. Mittels der Encoding-Schicht wird die komprimierte Repräsentation des Datensatzes mit den Kennwerten gebildet. Die Ausgabeschicht umfasst zweite Neuronen, welche eine Rekonstruktion der ersten Neuronen darstellen und die Bedeutung der ersten Neuronen haben.

Mittels des Autoencoder werden fehlerfreie sowie fehlerhafte Zustände der Maschine 1 gelernt und während einer Laufzeit der Maschine 1 Abweichungen von einem fehlerfreien Zustand der Maschine 1 detektiert. Die erste Abweichung wird als Rekonstruktionsfehler aus dem künstlichen neuronalen Netz 8 ermittelt, wobei der Rekonstruktionsfehler als Wurzel der mittleren Fehlerquadratsumme R aus den Soll-Werten $S_i$ von i = 1 bis N und den Ist-Werten $I_i$ von i = 1 bis N mittels folgender Bildungsvorschrift gebildet wird:

$$R = \sqrt{\frac{\sum_{i=1}^{N}(S_i - I_i)^2}{N}}$$

Auf Grundlage des in dem ersten Verfahrensschritt 3 mittels des Autoencoder ermittelten Rekonstruktionsfehlers wird danach in einem zweiten Verfahrensschritt 4 ein Dominanzkennwert ermittelt, welcher die erste Abweichung dominierend charakterisiert. Der Dominanzkennwert wird aus einem Histogramm 11, wie es beispielhaft in Fig. 2 dargestellt ist und welches die Mehrzahl an Kennwerten umfasst, ermittelt. Hierbei wird eine Häufigkeitsverteilung ermittelter Quadrate der Differenzen zwischen den Soll-Werten $S_i$ und den Ist-Werten $I_i$ gebildet. Jene Kategorie der Quadrate $(S_i - I_i)^2$, welche die Wurzel der mittleren Fehlerquadratsumme R anteilsmäßig dominiert, wird als Dominanzkennwert ausgewählt.

Der Dominanzkennwert ist in dem Verfahren gemäß Fig. 1 eine ein Verschleißverhalten des Lagers der Maschine 1 dominierend charakterisierende Abweichung einer Ist-Temperatur von einer Soll-Temperatur des Lagers.

In einem dritten Verfahrensschritt 5 wird dem Dominanzkennwert zumindest eine Warnereigniskategorie (in dem Verfahren gemäß Fig. 1 betrifft die Warnereigniskategorie Ereignisse, bei welchen eine maximal zulässige Temperatur des Lagers überschritten wird und von welchen bekannt ist, dass sie Warnungen in Bezug auf kritische technische Zustände der Maschine 1 auslösen) zugeordnet, welche einen Warnereignisschwellwert (in dem Verfahren gemäß Fig. 1 handelt es sich dabei um die maximal zulässige Temperatur des Lagers) umfasst. Der Warnereignisschwellwert wird dabei aus der industriellen Einrichtung 10 zur Überwachung, Steuerung und Datenerfassung ausgelesen und an die Recheneinrichtung 2 übermittelt.

In einem vierten Verfahrensschritt 6 wird dann ein eine Bedingung für ein Warnereignis der Warnereigniskategorie erfüllender Aufmerksamkeitskennwert gebildet und in das künstliche neuronale Netz 8 eingesetzt, wodurch das künstliche neuronale Netz 8 potenziell kritische Zustände der Maschine 1 auf Grundlage des Aufmerksamkeitskennwerts lernt.

Bei dem Aufmerksamkeitskennwert handelt es sich in dem Verfahren gemäß Fig. 1 um eine Differenz aus einem simulierten Temperaturmesswert des Lagers, welcher die maximal zulässige Temperatur des Lagers überschreitet, und der maximal zulässigen Temperatur des Lagers, für welche aus einer Datenbasis der industriellen Einrichtung 10 zur Überwachung, Steuerung und Datenerfassung bekannt ist, dass sie das Warnereignis auslöst.

Erfindungsgemäß ist es auch vorstellbar, den Aufmerksamkeitskennwert beispielsweise über reale Messungen an der Maschine 1 in einem Testbetrieb etc. zu generieren. Erfindungsgemäß denkbar ist es darüber hinaus auch, dass eine Mehrzahl an Aufmerksamkeitskennwerten gebildet wird oder dass der Aufmerksamkeitskennwert aus einem Satz von Werten ermittelt wird, welche zusammen einen spezifischen, eine Warnung auslösenden Maschinenzustand beschreiben etc.

Der Warnereignisschwellwert und der Aufmerksamkeitskennwert werden in einer Datenbank 12 der Recheneinrichtung 2 abgespeichert.

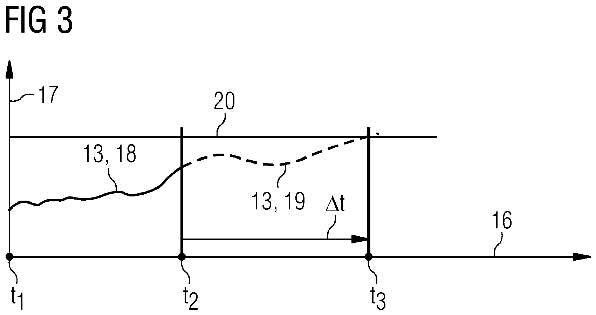

In einem fünften Verfahrensschritt 7 werden mittels des modifizierten künstlichen neuronalen Netzes 8 mit dem eingesetzten Aufmerksamkeitskennwert zweite Abweichungen messtechnisch an der Maschine 1 erfasster, technischer zweiter Ist-Zustände der Maschine 1, welche als Ist-Zustandsdaten zur Verarbeitung in dem erfindungsgemäßen Verfahren von dem Steuergerät 9 in die Recheneinrichtung 2 übertragen werden, von einem technischen zweiten Soll-Zustand der Maschine 1, welcher als Soll-Zustandsdatenwert zur Verarbeitung in dem erfindungsgemäßen Verfahren von der industriellen Einrichtung 10 zur Überwachung, Steuerung und Datenerfassung in die Recheneinrichtung 2 übertragen wird, in einem zeitlichen Verlauf 13, wie er beispielhaft in Fig. 3 gezeigt ist, detektiert. Die zweiten Abweichungen werden kontinuierlich detektiert, wobei der zeitliche Verlauf 13 der zweiten Abweichungen auf Basis einer Serie an Detektionsvorgängen gebildet wird. Die zweiten Abweichungen werden detektiert, da das modifizierte künstliche neuronale Netz 8 im Hinblick auf potenziell kritische Zustände der Maschine 1 im Zusammenhang mit dem Aufmerksamkeitskennwert trainiert ist.

Die zweiten Abweichungen sind in dem Verfahren gemäß Fig. 1 Temperaturdifferenzen zwischen Ist-Temperaturen und einer Soll-Temperatur des Lagers der Maschine 1. Der Warnereignisschwellwert ist in dem Verfahren gemäß Fig. 1 die maximal zulässige Temperatur des Lagers.

Die zweiten Abweichungen und der Warnereignisschwellwert sind also temperaturbasiert.

Erfindungsgemäß ist es aber auch denkbar, dass die zweiten Abweichungen und der Warnereignisschwellwert druckbasiert oder schwinggeschwindigkeitsbasiert etc. sind. Hierbei sind auch Werte für die zweiten Abweichungen und den Warnereignisschwellwert denkbar, welche auf Kombinationen von Temperaturinformationen und Druckinformationen, Temperaturinformationen und Schwinggeschwindigkeitsinformationen, Druckinformationen und Schwinggeschwindigkeitsinformationen oder Temperaturinformationen, Druckinformationen und Schwinggeschwindigkeitsinformationen etc. basieren.

Auf Grundlage der zweiten Abweichungen und des zeitlichen Verlaufs 13 wird mittels einer Regressionsanalyse, wie sie beispielhaft im Zusammenhang mit Fig. 3 beschrieben ist, prognostiziert, nach welcher Zeitdauer Δt der Warnereignisschwellwert durch die zweiten Abweichungen in ihrem zeitlichen Verlauf 13 erreicht wird, um einen kritischen technischen Zustand der Maschine 1 (in dem Verfahren gemäß Fig. 1 handelt es sich dabei um einen übermäßigen Verschleiß des Lagers aufgrund hoher Temperaturen) vor dessen Eintreten erkennen und behandeln zu können.

Wenn die mittels des fünften Verfahrensschritts 7 ermittelte Zeitdauer Δt gleich einem definierten Zeitgrenzwert oder kleiner als der Zeitgrenzwert ist, wird eine Maschinendrehzahl als Maschinenparameter der Maschine 1 beeinflusst, wodurch ein Maschinenschaden vermieden wird. Der Zeitgrenzwert wird so gewählt, dass für eine Reaktion im Hinblick auf eine Abwendung des kritischen technischen Zustands der Maschine 1 ausreichend Zeit zur Verfügung steht. Die Maschinendrehzahl wird graduell und kontinuierlich reduziert. Hierzu wird in dem fünften Verfahrensschritt 7 ein entsprechender Maschinenbefehl gebildet, welcher über das Steuergerät 9 an die Maschine 1 übertragen wird. Erfindungsgemäß ist es jedoch auch vorstellbar, dass ein sofortiger Notstopp an der Maschine 1 eingeleitet wird. Erfindungsgemäß ist es weiterhin denkbar, dass als Maschinenparameter ein Vorschub der Maschine 1 reduziert wird etc.

Zusätzlich wird, wenn die mittels des fünften Verfahrensschritts 7 ermittelte Zeitdauer Δt gleich dem definierten Zeitgrenzwert oder kleiner als der Zeitgrenzwert ist, über eine Ausgabeeinheit 14 mit einer Anzeige und einem Lautsprecher, wie sie beispielhaft in Fig. 2 gezeigt ist und welche mit der Recheneinrichtung 2 verbunden ist, eine visuelle und akustische Warnung ausgegeben, welche ankündigt, dass die Maschinendrehzahl verändert wird.

In Fig. 2 ist eine schematische Darstellung einer beispielhaften Ausführungsvariante eines erfindungsgemäßen Systems zur Prädiktion von Warnereignissen dargestellt.

Das System umfasst eine beispielhafte Ausführungsvariante einer erfindungsgemäßen Vorrichtung, welche eine Recheneinrichtung 2 und ein speicherprogrammierbares Steuergerät 9 aufweist. In der Recheneinrichtung 2 ist eine beispielhafte Ausführungsvariante eines erfindungsgemäßen Computerprogrammprodukts 15 implementiert, mittels welchem eine beispielhafte Ausführungsvariante eines erfindungsgemäßen Verfahrens, wie es beispielhaft im Zusammenhang mit Fig. 1 beschrieben ist, durchgeführt wird. Die Recheneinrichtung 2 umfasst weiterhin eine Datenbank 12 zur Speicherung von Daten, welche mit dem Computerprogrammprodukt 15 interagiert.

Das System umfasst weiterhin eine Maschine 1, eine Ausgabeeinheit 14 mit einer Anzeige und einem Lautsprecher zur Ausgabe von visuellen und akustischen Warnungen, wie sie beispielhaft im Zusammenhang mit Fig. 1 beschrieben sind, sowie zumindest eine industrielle Einrichtung 10 zur Überwachung, Steuerung und Datenerfassung, welche als Supervisory Control and Data Acquisition (SCADA) - Einrichtung ausgeführt ist.

Die Recheneinrichtung 2 ist mit dem Steuergerät 9 signalübertragend verbunden, das Steuergerät 9 signalübertragend mit der Maschine 1.

Die Recheneinrichtung 2 ist ferner mit der Ausgabeeinheit 14 sowie mit der industriellen Einrichtung 10 zur Überwachung, Steuerung und Datenerfassung signalübertragend gekoppelt. Von dem Steuergerät 9 werden mittels Sensoren an der Maschine 1 erfasste Zustandswerte bezüglich der Maschine 1 an die Recheneinrichtung 2 übertragen, von der industriellen Einrichtung 10 wird ein Warnereignisschwellwert im Zusammenhang mit einem kritischen technischen Zustand der Maschine 1 an die Recheneinrichtung 2 übertragen.

Die über die Ausgabeeinheit 14 ausgegebenen Warnungen beziehen sich auf mittels des Verfahrens gebildete Prädiktionsergebnisse im Hinblick auf Warnereignisse.

In dem Computerprogrammprodukt 15 sind ein als Autoencoder ausgebildetes neuronales Netz 8 zur Detektion von Anomalien im Betriebsverhalten der Maschine 1, wie es beispielhaft im Zusammenhang mit Fig. 1 beschrieben ist, sowie ein Histogramm 11 zur Ermittlung von Dominanzkennwerten, wie es beispielhaft im Zusammenhang mit Fig. 1 beschrieben ist, implementiert.

Fig. 3 offenbart ein Ergebnisdiagramm einer im Zusammenhang mit einer beispielhaften Ausführungsvariante eines erfindungsgemäßen Verfahrens gemäß Fig. 1 durchgeführten Regressionsanalyse.

Auf einer horizontalen, ersten Achse 16 des Ergebnisdiagramms sind Zeiten aufgetragen, auf einer vertikalen, zweiten Achse 17 des Ergebnisdiagramms Abweichungen zwischen Ist-Zuständen oder Prognosezuständen und einem Soll-Zustand einer Maschine 1, wie sie beispielhaft in Fig. 2 gezeigt ist.

Ein zeitlicher Verlauf 13 der Abweichungen aus einer kontinuierlichen Detektion von Anomalien der Maschine 1 sowie aus einer Prognose der Abweichungen mittels des im Zusammenhang mit Fig. 1 beschriebenen Verfahrens ist, ausgehend von einem ersten Zeitpunkt $t_1$ (Startzeitpunkt der Detektion) über einen zweiten Zeitpunkt $t_2$ (aktueller Zeitpunkt) bis zu einem dritten Zeitpunkt $t_3$ (prognostizierter Eintrittszeitpunkt eines Warnereignisses), in das Ergebnisdiagramm eingetragen.

Zwischen dem ersten Zeitpunkt $t_1$ und dem zweiten Zeitpunkt $t_2$ ist der zeitliche Verlauf 13 der Abweichungen ein nichtlinearer, zeitlicher Ist-Verlauf 18 aus der kontinuierlichen Detektion von Anomalien der Maschine 1. Ab dem zweiten Zeitpunkt $t_2$ ist der zeitliche Verlauf 13 der Abweichungen ein nichtlinearer, zeitlicher Prognoseverlauf 19, welcher mittels der Regressionsanalyse bestimmt wird.

In der Regressionsanalyse fungieren die Zeiten der ersten Achse 16 als Prädiktoren und die Abweichungen der zweiten Achse 17 als Kriterium. Der Prognoseverlauf 19 wird auf Grundlage eines ermittelten, nichtlinearen Funktionszusammenhangs zwischen den Zeiten und den Abweichungen bezüglich des Ist-Verlaufs 18 gebildet.

Eine konstante, einen mittels des Verfahrens gemäß Fig. 1 gebildeten Warnereignisschwellwert repräsentierende Funktion ist als zu der ersten Achse 16 parallele Schwellwertgerade 20 in das Ergebnisdiagramm eingetragen. Der Prognoseverlauf 19 schneidet die Schwellwertgerade 20 bei dem dritten Zeitpunkt $t_3$. Nach einer Zeitdauer $\Delta t$ zwischen dem zweiten Zeitpunkt $t_2$ und dem dritten Zeitpunkt $t_3$, welche mittels des im Zusammenhang mit Fig. 1 beschriebenen Verfahrens ermittelt wird, wird der Warnereignisschwellwert durch die Abweichungen in ihrem zeitlichen Verlauf 13 gemäß der Prognose erreicht. Dadurch kann ein kritischer technischer Zustand der Maschine 1, welcher durch den Warnereignisschwellwert repräsentiert ist, vor dessen Eintreten erkannt und behandelt werden. Beispielsweise kann dann, wenn die ermittelte Zeitdauer $\Delta t$ gleich einem definierten Zeitgrenzwert oder kleiner als der Zeitgrenzwert ist, ein Maschinenparameter der Maschine 1 beeinflusst werden. Hierbei kann z.B. eine Maschinendrehzahl reduziert werden.

Liste der Bezeichnungen

1    Maschine
2    Recheneinrichtung
3    Erster Verfahrensschritt
4    Zweiter Verfahrensschritt
5    Dritter Verfahrensschritt
6    Vierter Verfahrensschritt
7    Fünfter Verfahrensschritt
8    Neuronales Netz
9    Steuergerät
10   Industrielle Einrichtung
11   Histogramm
12   Datenbank
13   Verlauf
14   Ausgabeeinheit
15   Computerprogrammprodukt
16   Erste Achse
17   Zweite Achse
18   Ist-Verlauf
19   Prognoseverlauf
20   Schwellwertgerade

$I_i$    Ist-Wert
$S_i$    Soll-Wert
$R$    Wurzel der mittleren Fehlerquadratsumme
$\Delta t$    Zeitdauer
$t_1$    Erster Zeitpunkt
$t_2$    Zweiter Zeitpunkt
$t_3$    Dritter Zeitpunkt

**Patentansprüche**

1.  Computerimplementiertes Verfahren zur Prädiktion von Warnereignissen insbesondere für Maschinen, wobei in einem ersten Verfahrensschritt (3) mittels eines künstlichen neuronalen Netzes (8) zum Lernen von Codierungen zumindest eine erste Abweichung eines technischen ersten Ist-Zustands von einem technischen ersten Soll-Zustand auf Basis einer Mehrzahl von Kennwerten detektiert wird, **dadurch gekennzeichnet, dass** auf Grundlage des ersten Verfahrensschritts (3) in einem zweiten Verfahrensschritt (4) zumindest ein Dominanzkennwert ermittelt wird, welcher die erste Abweichung dominierend charakterisiert, dass in einem dritten Verfahrensschritt (5) dem zumindest einen Dominanzkennwert zumindest eine Warnereigniskategorie umfassend zumindest einen Warnereignisschwellwert zugeordnet wird, dass in einem vierten Verfahrensschritt (6) zumindest ein zumindest eine Bedingung für ein Warnereignis der Warnereigniskategorie erfüllender Aufmerksamkeitskennwert gebildet und in das künstliche neuronale Netz (8) eingesetzt wird, und dass in einem fünften Verfahrensschritt (7) mittels des künstlichen neuronalen Netzes (8) mit dem zumindest einen, eingesetzten Aufmerksamkeitskennwert zweite Abweichungen technischer zweiter Ist-Zustände von einem technischen zweiten Soll-Zustand in einem zeitlichen Verlauf (13) detektiert werden, wobei prognostiziert wird, nach welcher Zeitdauer ($\Delta t$) der zumindest eine Warnereignisschwellwert durch die zweiten Abweichungen in ihrem zeitlichen Verlauf (13) erreicht wird, um einen kritischen technischen Zustand vor dessen Eintreten erkennen und behandeln zu können.

2.  Computerimplementiertes Verfahren nach Anspruch 1, **dadurch gekennzeichnet, dass** der erste Ist-Zustand und die zweiten Ist-Zustände als messtechnisch erfasste Zustände verarbeitet werden.

3. Computerimplementiertes Verfahren nach Anspruch 1 oder 2, **dadurch gekennzeichnet, dass** der zumindest eine Warnereignisschwellwert und die zweiten Abweichungen temperaturbasiert sind.

4. Computerimplementiertes Verfahren nach einem der Ansprüche 1 bis 3, **dadurch gekennzeichnet, dass** der zumindest eine Warnereignisschwellwert und die zweiten Abweichungen druckbasiert sind.

5. Computerimplementiertes Verfahren nach einem der Ansprüche 1 bis 4, **dadurch gekennzeichnet, dass** der zumindest eine Warnereignisschwellwert und die zweiten Abweichungen schwinggeschwindigkeitsbasiert sind.

6. Computerimplementiertes Verfahren nach einem der Ansprüche 1 bis 5, **dadurch gekennzeichnet, dass** der zumindest eine Dominanzkennwert aus einem Histogramm (11), umfassend die Mehrzahl an Kennwerten, ermittelt wird.

7. Computerimplementiertes Verfahren nach einem der Ansprüche 1 bis 6, **dadurch gekennzeichnet, dass** in dem fünften Verfahrensschritt (7) mittels einer Regressionsanalyse prognostiziert wird, nach welcher Zeitdauer ($\Delta$t) der zumindest eine Warnereignisschwellwert durch die zweiten Abweichungen in ihrem zeitlichen Verlauf (13) erreicht wird.

8. Computerimplementiertes Verfahren nach einem der Ansprüche 1 bis 7, **dadurch gekennzeichnet, dass** in dem Verfahren Daten aus einem Steuergerät (9) verarbeitet werden.

9. Computerimplementiertes Verfahren nach einem der Ansprüche 1 bis 8, **dadurch gekennzeichnet, dass** dann, wenn die mittels des fünften Verfahrensschritts (7) ermittelte Zeitdauer ($\Delta$t) gleich einem definierten Zeitgrenzwert oder kleiner als der Zeitgrenzwert ist, zumindest ein Maschinenparameter einer Maschine (1) beeinflusst wird.

10. Computerimplementiertes Verfahren nach Anspruch 9, **dadurch gekennzeichnet, dass** der zumindest eine Maschinenparameter eine Maschinendrehzahl ist.

11. Computerimplementiertes Verfahren nach Anspruch 9, **dadurch gekennzeichnet, dass** der zumindest eine Maschinenparameter ein Vorschub ist.

12. Computerimplementiertes Verfahren nach einem der Ansprüche 1 bis 11, **dadurch gekennzeichnet, dass** dann, wenn die mittels des fünften Verfahrensschritts (7) ermittelte Zeitdauer ($\Delta$t) gleich einem definierten Zeitgrenzwert oder kleiner als der Zeitgrenzwert ist, eine visuelle oder/und akustische Warnung ausgegeben wird.

13. Computerimplementiertes Verfahren nach einem der Ansprüche 1 bis 12, **dadurch gekennzeichnet, dass** in dem Verfahren der zumindest eine Warnereignisschwellwert aus einer industriellen Einrichtung (10) zur Überwachung, Steuerung und/oder Datenerfassung verarbeitet wird.

14. Vorrichtung zur Datenverarbeitung, umfassend Mittel zur Ausführung des Verfahrens nach einem der Ansprüche 1 bis 13.

15. Vorrichtung nach Anspruch 14, **dadurch gekennzeichnet, dass** die Vorrichtung ein Steuergerät (9) umfasst.

16. Computerprogrammprodukt (15), umfassend Befehle, die bewirken, dass die Vorrichtung nach Anspruch 14 oder 15 das Verfahren nach einem der Ansprüche 1 bis 13 ausführt.

17. System, umfassend zumindest eine Vorrichtung nach Anspruch 14 oder 15, in welcher ein Computerprogrammprodukt (15) nach Anspruch 16 implementiert ist, ferner umfassend zumindest eine Maschine (1), zumindest eine Ausgabeeinheit (14) zur Ausgabe von visuellen oder/und akustischen Warnungen sowie zumindest eine industrielle Einrichtung (10) zur Überwachung, Steuerung und/oder Datenerfassung, **dadurch gekennzeichnet, dass** die zumindest eine Vorrichtung mit der zumindest einen Maschine (1), mit der zumindest einen Ausgabeeinheit (14) sowie mit der zumindest einen industriellen Einrichtung (10) zur Überwachung, Steuerung und/oder Datenerfassung signalübertragend verbunden ist.

# FIG 1

# FIG 2

FIG 3

Europäisches Patentamt

European Patent Office

Office européen des brevets

## EUROPÄISCHER RECHERCHENBERICHT

Nummer der Anmeldung

EP 23 17 9685

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 876 060 A1 (BOSCH GMBH ROBERT [DE]) 8. September 2021 (2021-09-08) * Absätze [0001] – [0006], [0041] – [0045]; Ansprüche 1-10; Abbildungen 1-3 * | 1-17 | INV. G05B23/02 G06N3/045 |
| | ----- | | ADD. |
| A | SEAN GIVNAN ET AL: "Real-Time Predictive Maintenance using Autoencoder Reconstruction and Anomaly Detection", ARXIV.ORG, CORNELL UNIVERSITY LIBRARY, 201 OLIN LIBRARY CORNELL UNIVERSITY ITHACA, NY 14853, 1. Oktober 2021 (2021-10-01), XP091071107, * See "5. Discussion" and "6. Conclusion" * | 1-17 | G05B13/02 |
| | ----- | | |
| A | SHI YILONG ET AL: "Study of Wind Turbine Fault Diagnosis and Early Warning Based on SCADA Data", IEEE ACCESS, IEEE, USA, Bd. 9, 7. September 2021 (2021-09-07), Seiten 124600-124615, XP011877850, DOI: 10.1109/ACCESS.2021.3110909 [gefunden am 2021-09-13] * See the last paragraph of Point "IV. Summarizes" concerning the dynamic fault threshold * | 1-17 | |
| | | | RECHERCHIERTE SACHGEBIETE (IPC) |
| | ----- | | G05B G06N |
| A | US 2020/371491 A1 (WONG TIMOTHY [GB]) 26. November 2020 (2020-11-26) * Ansprüche 1, 2 * | 1-17 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 16. November 2023 | Juillot, Olivier J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HUANG XIN ET AL: "Memory Residual Regression Autoencoder for Bearing Fault Detection", IEEE TRANSACTIONS ON INSTRUMENTATION AND MEASUREMENT, IEEE, USA, Bd. 70, 9. April 2021 (2021-04-09), Seiten 1-12, XP011853501, ISSN: 0018-9456, DOI: 10.1109/TIM.2021.3072131 [gefunden am 2021-05-06] * Zusammenfassung * ----- | 1-17 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 16. November 2023 | Juillot, Olivier J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 17 9685

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2023

| Im Recherchenbericht angeführtes Patentdokument | Datum der Veröffentlichung | Mitglied(er) der Patentfamilie | Datum der Veröffentlichung |
|---|---|---|---|
| EP 3876060 A1 | 08-09-2021 | CN 113360304 A<br>DE 102020202866 A1<br>EP 3876060 A1 | 07-09-2021<br>09-09-2021<br>08-09-2021 |
| US 2020371491 A1 | 26-11-2020 | EP 3701430 A1<br>GB 2567850 A<br>US 2020371491 A1<br>WO 2019081937 A1 | 02-09-2020<br>01-05-2019<br>26-11-2020<br>02-05-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016013985 A1
- WO 2022225506 A1

- WO 2019219756 A1